(19) Europäisches Patentamt
European Patent Office
Office européen des brevets

(11) EP 2 129 147 B1

# (12) EUROPEAN PATENT SPECIFICATION

(45) Date of publication and mention of the grant of the patent:
**06.04.2016 Bulletin 2016/14**

(21) Application number: **08706484.6**

(22) Date of filing: **04.02.2008**

(51) Int Cl.:
***H04W 4/00*** *(2009.01)* ***H04W 36/00*** *(2009.01)*
*H04W 72/14* *(2009.01)* *H04W 36/02* *(2009.01)*

(86) International application number:
**PCT/CN2008/000306**

(87) International publication number:
**WO 2008/098482 (21.08.2008 Gazette 2008/34)**

(54) **A METHOD FOR REALIZING FAST HANDOVER IN ENHANCED UPLINK**

VERFAHREN ZUM REALISIEREN EINES SCHNELLEN HANDOVER IN DER ERWEITERTEN AUFWÄRTSSTRECKE

PROCÉDÉ DE TRANSFERT RAPIDE DANS UNE LIAISON MONTANTE AMÉLIORÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.02.2007 CN 200710084660**

(43) Date of publication of application:
**02.12.2009 Bulletin 2009/49**

(73) Proprietor: **ZTE Corporation**
**Shenzhen, Guangdong 518057 (CN)**

(72) Inventor: **CHEN, Hui**
**Shenzhen, Guangdong 518057 (CN)**

(74) Representative: **Price, Nigel John King**
**J A Kemp**
**14 South Square**
**Gray's Inn**
**London WC1R 5JJ (GB)**

(56) References cited:
**WO-A2-2005/122704 US-A1- 2005 094 586**

- **NOKIA: "Non contention based HO", 3GPP DRAFT; R2-070011 NON CONTENTION BASED HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133130, [retrieved on 2007-01-12]**
- **"3rd Generation Partnership Project;Technical Specification Group Radio Access Network;1.28 Mcps TDD Enhanced Uplink;Physical Layer Aspects(Release 7)", 3GPP DRAFT; TR25.827V1.1.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070207, 7 February 2007 (2007-02-07), XP050105225, [retrieved on 2007-02-07]**
- **ZTE ET AL: "Introduction of PRACH configuration in messages triggering E-DCH serving cell change in LCR TDD mode", 3GPP DRAFT; R2-072295(INTRODUCTION OF PRACH CONFIGURATION IN PROTOCOL MESSAGES TRIGGERING E-DCH SERVING CELL CHANGE IN LCR TDD SYSTEM), 3RD GENERATION PARTNERSHIP PROJECT (3GPP), MOBILE COMPETENCE CENTRE ; 650, ROUTE DES LUCIOLES ; F-06921 SOPHIA-ANT, vol. RAN WG2, no. Kobe, Japan; 20070515, 15 May 2007 (2007-05-15), XP050135140, [retrieved on 2007-05-15]**
- **3GPP: '3rd Generation Partnership Project; Technical Specification Group Radio Access Network; 1.28 Mcps TDD Enhanced Uplink; Physical Layer Aspects (Release 7)' 3GPP TR 25.827 V1.0.0 November 2006, XP008115561**
- **3GPP: '3rd Generation Partnership Project; Technical Specification Group Radio Access Network; Feasibility study on uplink enhancements for UTRA TDD (Release 6)' 3GPP TR 25.804 V6.1.0 March 2006, XP008115560**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to Time Division Synchronous Code Division Multiple Access system, and more particularly, relates to a method for realizing fast handover in enhanced uplink in Time Division Synchronous Code Division Multiple Access system.

### Background of the Invention

The application for setting up an enhanced uplink of TD-SCDMA (Time Division Synchronous Code Division Multiple Access) system is approved by 3GPP (3rd Generation Partnership Project) in March 2006. The enhanced uplink is generally referred to as HSUPA (High Speed Uplink Packet Access) whose function is to improve the efficiency of the uplink by advanced technologies, so as to effectively support web browsing, video, multimedia information and other IP-based services.

A UE (User Equipment) using HSUPA service works in the state of CELL-DCH (Dedicated Channel state). A transport channel E-DCH (Enhanced-uplink Dedicated transmit Channel) for carrying enhanced uplink data is newly added in HSUPA, and the TTI (Transmit Time Interval) of the E-DCH is 5ms.

The physical channels related to E-DCH are:

E-AGCH (E-DCH Absolute Grant Channel, i.e., Enhanced Absolute Grant Channel) is a control channel used for Node B (base station) to transmit the grant information;

E-PUCH (E-DCH Physical Uplink Channel, which is also called as Enhanced Physical Uplink Channel) is a traffic channel used for the UE to carry encoding combination transport channels with E-DCH type, and information related to scheduling is also transmitted in this channel;

E-RUCCH (HSUPA Random Access Uplink Control Channel, i.e., Enhanced Uplink Random Access Uplink Control Channel) is a physical layer control channel used for transmitting the information related to scheduling when UE has no grant, and E-RUCCH uses the random access physical channel resource;

E-HICH (E-DCH HARQ Indication Channel, i.e., Enhanced HARQ Indication Channel) is a physical layer control channel used for Node B to carry HARQ (Hybrid Automatic Repeat reQuest) indication information.

According to the different ways of scheduling, HSUPA service is divided into scheduling service and non-scheduling service, wherein the resource of the non-scheduling service is allocated to UE by SRNC (Serving Radio Network Controller), and the way of allocating is the same as that of the dedicated channel in the prior art; in the scheduling service, the resource pool of enhanced uplink is allocated to Node B by SRNC, and Node B allocates resources to individual UE.

In scheduling service, the UE should report some information to aid the scheduling of Node B, the information including the information of UE buffer, margin of power, the path-loss measurement information of local cell and adjacent cells, and so on. If the UE has a granted E-PUCH, the scheduling information will be transmitted through the E-PUCH channel; otherwise, it will be transmitted through the E-RUCCH channel. When the UE has uplink data to be transmitted, there is possibility of triggering the transmission of the scheduling information. The grant information is not transmitted to the UE at each TTI, and whether/when to transmit the grant information is totally determined by the scheduling functional entity in Node B according to the present condition of the network and the priority condition of each competitive UE.

In scheduling service, the UE firstly request for resource through the E-RUCCH, and Node B transmits absolute grant information including the power grant information and physical channel grant information to the UE through the E-AGCH channel. Wherein, the power grant information is used for allocating available system jamming resources between the competitive UEs; and the physical channel grant information is used for allocating the time slots and code resources used by the E-PUCH between the competitive UEs. A piece of grant information on the E-AGCH is assigned to one UE at one time, and although the minimum duration time suitable for grant is one E-DCH TTI, the grant of variable time length can be supported by using RDI (Resource Duration Indication), for example, RDI can indicate the UE to use the grant resource in the following 8 TTIs. The UE intercepts a group of E-AGCHs which are configured for the UE by the high level of the network, and the UE reads out the grant information therein once it successfully decodes the information and transmits the data through the granted E-PUCH channel after the timing $n_{E\text{-}AGCH}$ specified in the protocol times out. Node B decodes the received E-PUCH channel data, and returns ACK on E-HICH channel if successfully decoding the data; otherwise it returns NACK, and the UE should retransmit the data according to the retransmission mechanism.

The working process of HSUPA scheduling service is shown in FIG. 1, and the UE requests the SRNC to set up RRC (Radio Resource Control) connection before step 101, wherein the reason of connection is to initiate the packet service. The steps in FIG. 1 are specified as follows:

101: SRNC initiates a process of Radio Link Setup to Node B through NBAP (Node B Application Part) protocol if the SRNC thinks that it can set up an enhanced link for the UE through the process of admission control, wherein the information transmitted to Node B includes parameters related to the enhanced uplink access, such as information related to the transport channel, E-DCH serving radio link number, and so on; if a radio link has been set up for the UE previously, the enhanced uplink parameters will be configured through the process of radio link reconfiguration.

102: Node B receives the configuration parameters, allocates E-AGCH channel and E-RNTI (E-DCH Radio Network Temporary Identifier) for the UE from the enhanced uplink public resource pool in the local cell, and returns the information to the SRNC through the Radio Link Setup Response or Radio Link Reconfiguring Response of the NBAP;

103: SRNC initiates a Radio Bearer Setup Request including the information of E-DCH transport channel configuration, information related to E-PUCH, information of E-AGCH channel, information of E-HICH channel, and so on to the UE through RRC protocol; if a radio link has been set up for the UE previously, relative configuration of the enhanced uplink access will be performed through the process of radio bearer reconfiguration.

104: The UE receives configuration parameters and returns response message to the network side; determines that the E-DCH transmission service begins to be available according to the configuration parameters;

105: When the amount of data in the buffer corresponding to the UE enhanced uplink radio bearer (that is, the radio bearer mapping onto the E-DCH) changes from zero to non-zero, the UE initiates the process of E-RUCCH random access, including the scheduling information;

106: Node B adds the UE into the competitive UE group using E-DCH resource after detecting the request for random access transmitted by the UE, schedules the UE according to the condition of resource in the cell, the QOS attribute of enhanced uplink radio bearer of the UE, the scheduling information of UE, and so on, and sends grant information to the UE through the E-AGCH channel after allocating suitable resources;

107: After the UE receives the E-AGCH, it transmits data on the granted E-PUCH after the timing $n_{E\text{-}AGCH}$ specified in the protocol times out; if the UE buffer still has data to be transmitted, the scheduling information will also be transmitted correspondingly;

108: Node B decodes the data on the E-PUCH channel and returns ACK (acknowledge) /NACK (retransmission) information on the E-HICH channel after the timing $n_{E\text{-}HIGH}$ specified in the protocol times out;

109: If the last grant utility time of E-AGCH has timed out, Node B continues to allocate resources for the UE according to the scheduling strategy, and transmits the grant information through the E-AGCH channel;

110-111: Same as steps 107 and 108;

112: Apply for resources through E-RUCCH if there are still data in the UE buffer to be transmitted while there is no grant information at present.

In step 105 and step 112, the UE requests Node B for scheduling resource by using E-RUCCH. The E-RUCCH channel is a random access channel and it shares channel resource with PRACH (Physical Random Access CHannel), the UE obtains random access resource information used by the local cell from the cell broadcast information, and when necessary, transmits E-RUCCH to request for resources. Since the random access is perform after the process of uplink synchronization in TD-SCDMA system, besides the information of random access physical channels, the information of random access resources also includes parameters required for uplink synchronization, such as information of uplink synchronization code, fast physical access channel and so on. At most 16 kinds of random resource configuration instances can be supported in a cell; please refer to the information unit of PRACH system information list in 3GPP TS25.331. Each configuration instance comprises information such as the random access physical channel, available synchronization code, fast physical access channel, and so on.

The present cell which provides HSUPA service to the UE is referred to as E-DCH serving cell. When the E-DCH serving cell is changed (that is, a handover occurs), the RNC sends different handover control commands according to different parameter settings in the target cell and the original serving cell. When the original serving cell and target call belong to the same Node B, the serving RNC of the UE will generally reconfigure the radio network of the UE into a new cell through the message of physical channel reconfiguration; when the original serving cell and target call do not belong to the same Node B, the serving RNC of the UE will generally reconfigure the radio network of the UE into a new cell through the process of Transport Channel Reconfiguration or Radio Bearer Reconfiguration. After the radio network is configured in the new cell, the UE should firstly initiate a process of uplink synchronization to set up synchronization of the uplink before it performs other services. When the UE decides to request Node B for scheduling resource of the enhanced uplink according to the condition of its buffer, it firstly should obtain the information of random access resources from the broadcast information, and this process takes 40ms to 350ms. This delay is unacceptable for enhanced uplink services, especially for application scenarios of real-time services such as VoIP (network telephone), video and so on.

US 2005/094586 A1 discloses a wireless communication method and system for supporting an enhanced uplink dedicated channel (EU-DCH) inter-Node-B serving cell change.

## Summary of the Invention

The technical problem to be solved in the present invention is to provide a method for realizing fast handover in enhanced link in Time Division Synchronous Code Division Multiple Access system to eliminate the enhanced uplink service delay due to the need for reading out the cell broadcast information after cell handover in the scheduling service of the High Speed Uplink Packet Access, and to realize fast handover.

In order to solve the above technical problem, the present invention provides a method for realizing fast handover of the enhanced link to be applied in Time Division Synchronous Code Division Multiple Access system, comprising the following steps:

(a) when cell handover occurs for a User Equipment UE and a network side determines that the UE can perform enhanced uplink service in the target cell, sending by the network side a handover command carrying information of random access resources of a target cell to the UE; and

(b) after the UE completes the handover process, if there are data available for transmission in the buffer(s) corresponding to the enhanced uplink radio bearer(s), initiating by the UE an enhanced uplink random access according to the information of random access resources carried in the handover command to request scheduling resources from the base station Node B;

wherein, in said step (a), the information of random access resources comprises the information of one or more random access physical channels and enhanced uplink random access synchronization code information.

Further, said information of random access resources also comprises the number of random access attempt times and random access timer values.

Further, in said step (a), said handover command is a Radio Resource Control message, which can be Physical Channel Reconfiguring, Transport Channel Reconfiguring or Radio Bearer Reconfiguring.

Further, said cell handover means that the enhanced uplink serving cell changes for the UE, or the serving cell changes accompanying with a handover from normal uplink channel to the enhanced uplink channel for the UE.

Further, said random access physical channel belongs to the same configuration instance of random access resource in the system information of the cell with the uplink synchronization code and fast physical access channel carried in the handover command.

Further, in said step (b), when the UE initiates an enhanced uplink random access, the uplink synchronization is performed by using the uplink synchronization code corresponding to the enhanced uplink random access in the information of synchronization code carried in the handover command.

Further, in said step (b), Node B returns acknowledge message on Fast Physical Access CHannel FPACH after detecting the uplink synchronization code of the UE, and the UE selects one of the random access physical channels carried in the handover command according to the sub-frame number when receiving said Fast Physical Access CHannel to initiate the enhanced uplink random access.

Further, in said step (a), if the target cell supports the enhanced uplink service, the service attributes requested by the UE can perform the enhanced uplink service and the resource condition of the target cell can admit the UE to perform the enhanced uplink service, the network side determines that the UE can perform the enhanced uplink service in the target cell.

Further, said network side is the Service Radio Network Controller (SRNC) of the UE.

Further, in said step (a), when the base station Node B to which the target cell belongs is not under the control of the SRNC of the UE, said SRNC obtains the information of random access resources of the target cell from the Drift Radio Network Controller (DRNC) through Iur interface.

Further, in said step (b), the process of the UE handing over to the target cell comprises: the UE resets up a radio link in the target cell after receiving the handover command, and returns the response message of handover command to the network side after the radio link has been successfully reset up.

The present invention enables the UE to obtain the random access resource of the target cell in advance through carrying the information of random access resources of the target cell in the handover command, and after the UE hands over to the target cell, it could immediately initiate E-RUCCH access to apply the Node B for resources, avoiding the waste of time for the UE reading out the cell broadcast information and obtaining the information of random access resources therefrom, significantly increasing the handover speed of the E-DCH link and the random access speed of enhanced uplink after the handover.

Brief Description of the Drawings

FIG. 1 is a flow chart of enhanced link configuration and data transmission in the prior art;

FIG. 2 is a flow chart of signaling configuration of E-DCH link handover among Node Bs and data transmission in accordance with the present invention.

Preferred Embodiments of the Present Invention

The present invention provides a method for increasing the handover speed of E-DCH link in HSUPA scheduling service, and when the user performs HSUPA scheduling service and a E-DCH serving cell handover occurs, the handover command transmitted to the UE by the high level of the network comprises information related to E-RUCCH random access resource of the target cell to enable the UE to immediately initiate a scheduling request after the UE performs uplink synchronization in the new cell after handover without the need for reading out the system information of the new cell.

The embodiment will be described by taking TD-SCDMA system as an example.

Step 1: when the network side makes cell handover decision for the UE according to the measurement information of the UE and determines that the UE could perform enhanced uplink access service in the target cell, the network side carries the information of random access resources of the target cell in the handover command transmitted to the UE.

Here, the handover is under two scenarios: one is that the UE is in CELL_DCH state and performs HSUPA service in the original serving cell and also in the target cell; the other is that the UE is in CELL_DCH state, performs common uplink service (that is, uses the conventional dedicated physical channel) in the original serving cell, and performs HSUPA service in the target cell. The former scenario is that the E-DCH serving cell changes; and the second is that the serving cell changes accompanied by the change of channel type. The basis for the SRNC determining whether the UE can perform enhanced uplink service in the target cell comprises: the target cell supports the enhanced uplink service, the current service attributes of the UE can perform the enhanced uplink service, and the target cell admits the UE to perform the enhanced uplink service.

The information of the random access resource mainly includes one or more random access physical channels (there are at most two random access physical channels when the TTI of the E-RUCCH is 10ms) and information of E-RUCCH synchronization code; and it can also includes some parameters of random access control, such as information about the number of random access attempt times, random access timer values and so on. As shown in Table 1, there is an example of the information of random access resources. Wherein, PRACH Definition defines at most two random access channels (at most two PRACH channels need to be defined since the largest TTI of the E-RUCCH is 10ms); E-RUCCH SYNC_UL codes bitmap denotes the information of synchronization code can be used for initiating the enhanced uplink random access; N-RUCCH and T-RUCCH are used for the number of attempt times for controlling the random access and the timing.

Table 1 the information of random access resources in the handover command

| Name of information element | Need | Multi | Type and reference | Description |
|---|---|---|---|---|
| PRACH Definition | MP | 1 or 2 | | At most two random access physical channels can be defined |
| >Timeslot number | MP | | Timeslot number 10.3.6.84 | Timeslot number |

(continued)

| Name of information element | Need | Multi | Type and reference | Description |
|---|---|---|---|---|
| >PRACH Channelisation code | MP | | PRACH Channelisation Code 1.28Mcps TDD 10.3.6.51a | Code channel |
| > Midamble Shift and burst type | MP | | Midamble shift and burst type 10.3.6.41 | Intermediate code |
| E-RUCCH SYNC_UL codes bitmap | MP | | Bitstring (8) | Information of E-RUCCH synchronization code |
| N-RUCCH | MD | | Integer (0...7) | The maximum number of random access attempt times |
| T-RUCCH | MD | | Integer (100,200...2000 by step of 200) | Random access timer |

The handover command transmitted to the UE by the network side might be one of the following RRC (Radio Resource Control) messages: Physical Channel Reconfiguration, Transport Channel Reconfiguration and Radio Bearer Reconfiguration. Which message is selected depends on the strategy of the RNC, for example, when the transport channel configuration does not change, the message of Physical Channel Reconfiguration can be preferably selected; when the transport channel configuration needs change while the radio bearer configuration does not change, the message of Transport Channel Reconfiguration can be preferably selected; and when the radio bearer configuration needs change, the message of Radio Bearer Reconfiguration can be preferably selected.

When the target Node B is not under the control of the serving RNC of the UE, the serving RNC of the UE obtains the configuration of random access resource of the target cell from the DRNC (Drift RNC) through the lur interface and transmits it to the UE through the handover command.

As shown in Table 1, the information of random access resources will comprise the resource information of one or two random access physical channels. The process of random access in the present TD-SCDMA system is always accompanied with the process of uplink synchronization. When 3GPP designs the process of random access, the random access physical channel used therein has corresponding relationship with the uplink synchronization code (SYNC_UL) and Fast Physical Access CHannel (FPACH) used when initiating the random access on the physical channel, and they should belong to the same configuration instance in the PRACH system information list (Physical Random Access Channel system information list) in the cell broadcast information (at most 16 random access resource configuration instances can be supported in one cell at present, which could be referred to the information unit of PRACH system information list in 3GPP TS25.331).

The uplink synchronization code and FPACH channel in the handover command are configured in the information unit of Uplink Timing Advance Control. Table 2 shows the configuration of the uplink synchronization code and FPACH channel in the handover command, wherein the SYNC_UL codes bitmap is the synchronization code information that can be used by the UE, and some of the synchronization codes are used for common random access while others are used for E-RUCCH random access. The synchronization codes used for E-RUCCH random access in the E-RUCCH SYNC_UL codes bitmap in Table 1 should be a subset of the available synchronization codes in the SYNC_UL codes bitmap.

Table 2 Uplink Timing Advance Control

| Name of information element | Need | Multi | Type and reference | Description |
|---|---|---|---|---|
| ...... | | | | Other configuration parameters are omitted |
| >>CHOICE *TDD option* | MP | | | |
| >>>3.84 Mcps TDD | | | | Configuration parameters suitable for TD-CDMA |
| ...... | | | | |

(continued)

| Name of information element | Need | Multi | Type and reference | Description |
|---|---|---|---|---|
| | | | | |
| >>>1.28 Mcps TDD | | | | Configuration parameters suitable for TD-SCDMA |
| >>>>SYNC_UL codes bitmap | MP | | Bitstring(8) | Synchronization code configuration (the present configuration) |
| >>>>FPACH info | MP | | FPACH info 10.3.6.35a | FPACH configuration (the present configuration) |
| ...... | | | | Other available configurations are omitted |

The UE selects one of the random access physical channels to transmit the E-RUCCH channel, and the selection should according to the relationship between FPACH channel and the random access physical channel in the process of general random access defined in the 3GPP specification TS25.224 to decide which channel is selected to be used for E-RUCCH channel. The relationship between the FPACH channel number and the random access channel meets the following equation:

$$(SFN' \bmod Li)=n_{RACHi};$$

$n_{RACHi}=0,...,N_{RACH}-1$; wherein $N_{RACH}$ is the number of random access physical channels corresponding to the FPACH, and $N_{RACH}$ is not larger than Li; Li is Length of transport blocks associated to PRACH, and its value is generally 1 or 2 for E-RUCCH; SFN' is the system sub-frame number when the UE receives acknowledgement on $FPACH_i$.

Step 2, after the UE hands over to the target cell, if there are data to be transmitted in the buffer corresponding to the enhanced uplink radio bearer, perform the enhanced uplink random access and request Node B for scheduling resources.

The UE initiates the enhanced uplink random access according to the information of random access resources carried in the handover command.

The UE should firstly reset up a radio link in the target cell after receiving the handover command. The process of the UE setting up a link comprises the process of uplink synchronization, and the UE returns handover completed response to the network side after it successfully sets up the radio link (that is, after the synchronization is completed), the process of handover is completed and the UE hands over to the target cell.

The process of synchronization of the UE setting up the radio link can be separated from the process of synchronization of the enhanced uplink random access performed thereafter, or these two processes of synchronization can be combined into one process. "Separate" means that the synchronization code of the common random access is firstly selected to initiate the uplink synchronization after the UE receives the handover command, and a handover completed response is returned to the network side after the process of synchronization is completed, and then the UE determines whether to initiate the enhanced uplink random access according to whether there are data need to be transmitted in the buffer corresponding to the enhanced uplink radio bearer, if there are data need to be transmitted in the buffer, then it initiates the enhanced uplink synchronization and random access. "Combine" means that if the UE wants to perform HSUPA scheduling service after receiving the handover command, the UE should select one synchronization code dedicated for E-RUCCH random access to be transmitted according to the synchronization code information carried in the handover command, and Node B returns acknowledge information on the FPACH channel after detecting the synchronization code, and the UE selects one channel from one or more random access physical channels (there are at most two random access physical channels when the maximum TTI of the E-RUCCH is 10ms) carried in the handover command based on the system sub-frame number at which the FPACH acknowledgement is received to perform E-RUCCH random access. If the activation time in the handover command does not allow the UE to immediately initiate the enhanced uplink random access, the UE should wait and initiate the enhanced uplink synchronization and random access at the activation time.

Node B will allocate the enhanced uplink resources to the UE according to its scheduling algorithm after receiving the request for enhanced uplink random access from the UE.FIG. 2 is a flow chart of UE E-DCH serving cell change among different Node Bs in the same SRNC, and the signaling process between RNC and Node B at the network side is briefly drawn in FIG. 2. In this embodiment, the configuration for the target Node B by SRNC applies the typical two steps, that is, firstly set up a radio link in the target cell, and then configure the E-DCH link to the radio link through the process of radio link reconfiguration, these processes can refer to the E-DCH handover process in 3GPP TS25.931.

201: SRNC (Serving RNC) makes cell handover decision according to the measurement information of UE, and determines that the UE uses HSUPA service in the target cell. The SRNC initiates the process of Radio Link Setup to the target Node B according to NBAP (Node B Application Part) protocol to configure a new radio link. And Node B returns a response after it successfully configures a new radio link.

202: The SRNC asks the original serving Node B to delete the E-DCH resource related to the UE through the process of synchronization radio link reconfiguration of the NBAP and sets the activation time of the configuration. A response is returned after the configuration is successfully performed by the original serving Node B.

203: The SRNC asks the target Node B to set up E-DCH resource for the UE on the radio link set up in step 201 through the process of synchronization radio link reconfiguration of the NBAP and sets the activation time, wherein the activation time is consistent with that in step 202. A response is returned after the configuration is successfully performed by the target Node B.

204: The SRNC transmits a handover command to the UE, and in this embodiment, the SRNC configures the UE with the resources of the target cell according to the RRC message of Transport Channel Reconfiguraton. The SRNC also includes the information of random access resources of the target cell including the content described in Table 1 besides the original configuration information (including the content described in Table 2).

205: The UE receives the message of request for reconfiguring transport channel and initiates uplink synchronization in the target cell to reset up the link. If the activation time allows and the UE determines that there are data to be transmitted in the enhanced uplink buffer, the UE can directly select the synchronization code corresponding to the E-RUCCH random access to initiate uplink synchronization; the UE can also initiate common uplink synchronization firstly to set up the link and then initiate the uplink synchronization of the E-RUCCH random access at the activation time.

206: Target Node B returns acknowledge message on the FPACH channel after detecting the synchronization code of the UE.

In the following, there is no certain timing relationship between step 207 and step 208, step 209 is processed after step 208, and step 210, step 211 and step 212 are processed after step 207:

207: The UE initiates the enhanced uplink random access, and selects the random access channel to send E-RUCCH according to the system sub-frame number when the FPACH returns in step 206.

208: The UE returns the message of response for reconfiguring transport channel to the RNC.

209: The SRNC notifies the original serving Node B to delete the radio link of the UE.

210: Node B transmits the grant information to the UE through the E-AGCH channel.

211: After the UE receives the E-AGCH, it transmits data on the granted E-PUCH after the timing $n_{E_AGCH}$ specified in protocol times out; if there are still data to be transmitted in the buffer of the UE, the scheduling information will be transmitted correspondingly.

212: The Node B decodes the data on the E-PUCH channel, and returns information ofACK/NACK on the E-HICH channel.

Industrial Applicability

The present invention enables the UE to obtain the random access resource of the target cell in advance through carrying the information of random access resources of the target cell carried in the handover command, and after the UE link is reconfigured to a new cell, it could immediately initiate E-RUCCH access to apply the Node B for resources, thus avoiding waste of time for the UE reading out the cell broadcast information and obtaining the information of random access resources therefrom, significantly increasing the handover speed of the E-DCH link and the random access speed of enhanced uplink after the handover.

## Claims

1. A method for realizing fast handover in enhanced uplink to be applied in a Time Division Synchronous Code Division Multiple Access system, comprising the following steps of:

   (a) when cell handover occurs for a User Equipment and a network side determines that the User Equipment can perform enhanced uplink service in a target cell, sending by the network side a handover command carrying information of random access resources of the target cell to the User Equipment; and
   (b) after the User Equipment completes the cell handover's process, if there are data available for transmission in buffer(s) corresponding to enhanced uplink radio bearer(s), initiating by the User Equipment an enhanced uplink random access according to the information of random access resources carried in the handover command to request scheduling resources from a base station Node B;

   wherein in said step (a), the information of random access resources comprises information of one or more random access physical channels and enhanced uplink random access synchronization code information.

2. The method of claim 1, wherein said information of random access resources further comprises a number of random access attempt times and random access timer values.

3. The method of claim 1, wherein in said step (a), said handover command is a Radio Resource Control message, which can be Physical Channel Reconfiguration, Transport Channel Reconfiguration or Radio Bearer Reconfiguration.

4. The method of claim 1, wherein said cell handover means that an enhanced uplink serving cell changes for the User Equipment, or a serving cell changes accompanying a handover from normal uplink channel to an enhanced uplink channel for the User Equipment.

5. The method of claim 1, wherein said one or more random access physical channels belong to a same configuration instance of random access resources in system information of a cell with an uplink synchronization code and a Fast Physical Access Channel carried in said handover command.

6. The method of claim 1, wherein in said step (b), when the User Equipment initiates an enhanced uplink random access, uplink synchronization is performed by using a uplink synchronization code corresponding to the enhanced uplink random access in the synchronization code information carried in the handover command.

7. The method of claim 6, wherein in said step (b), Node B returns an acknowledge message on a Fast Physical Access Channel after detecting the uplink synchronization code of the User Equipment, and the User Equipment selects one of the random access physical channels carried in the handover command according to a sub-frame number when receiving said Fast Physical Access Channel to initiate the enhanced uplink random access.

8. The method of claim 1, wherein in said step (a), if the target cell supports the enhanced uplink service, the service attributes requested by the User Equipment can perform the enhanced uplink service, and resource condition of the target cell can admit the User Equipment to perform the enhanced uplink service, the network side determines that the User Equipment can perform the enhanced uplink service in the target cell.

9. The method of claim 1, wherein said network side is a Service Radio Network Controller of the User Equipment.

10. The method of claim 9, wherein in said step (a), when a base station Node B to which the target cell belongs is not under control of the Service Radio Network Controller of the User Equipment, said Service Radio Network Controller obtains the information of random access resources of the target cell from a Drift Radio Network Controller through an Iur interface.

11. The method of claim 1, wherein in said step (b), the cell handover's process comprises: the User Equipment resets up a radio link in the target cell after receiving the handover command, and returns a message of handover command response to the network side after the radio link has been successfully reset up.

**Patentansprüche**

1. Verfahren zur Realisierung einer schnellen Übergabe bei einem verbesserten Uplink, welche in einem ‚Time Division Synchronous Code Division Multiple Access'-System anzuwenden ist, die folgenden Schritte umfassend:

   (a) wenn eine Zellenübergabe für ein Benutzer-Gerät auftritt und eine Netzwerkseite bestimmt, dass das Benutzer-Gerät einen verbesserten Uplink-Dienst in einer Zielzelle durchführen kann, Senden eines Übergabebefehls von der Netzwerkseite, welcher eine Information über Direktzugriff-Betriebsmittel der Zielzelle überträgt, an das Benutzer-Gerät; und
   (b) nachdem das Benutzer-Gerät das Verfahren der Zellenübergabe abgeschlossen hat, wenn Daten vorhanden sind, welche zur Übertragung in einem bzw. in mehreren Puffern entsprechend einem oder mehreren Funkträgern des verbesserten Uplinks verfügbar sind, Einleiten eines Direktzugriffs des verbesserten Uplinks durch das Benutzer-Gerät entsprechend der Information der Direktzugriff-Betriebsmittel, welche in dem Übergabebefehl übertragen werden, um Ablaufsteuerungsmittel von einem Basisstation-Knoten B anzufordern;

   wobei in dem Schritt (a) die Information der Direktzugriff-Betriebsmittel eine Information über einen oder mehrere physikalische Direktzugriff-Kanäle und eine Direktzugriff-Synchronisationscode-Information des verbesserten Uplinks umfasst.

2. Verfahren nach Anspruch 1, wobei die Information der Direktzugriff-Betriebsmittel darüber hinaus eine Anzahl von Direktzugriff-Versuchen und Direktzugriff-Zeitgeberwerten umfasst.

3. Verfahren nach Anspruch 1, wobei in dem Schritt (a) der Übergabebefehl eine ‚Radio Resource Control'-Nachricht ist, welche eine ‚Physical Channel Reconfiguration', eine ‚Transport Channel Reconfiguration' oder eine ‚Radio Bearer Reconfiguration' sein kann.

4. Verfahren nach Anspruch 1, wobei die Zellenübergabe bedeutet, dass ein verbesserter Uplink, welcher eine Zelle besorgt, für das Benutzer-Gerät geändert wird oder eine versorgende Zelle geändert wird, was mit einem Übergang von einem Kanal eines normalen Uplinks zu einem Kanal eines verbesserten Uplinks für das Benutzer-Gerät einhergeht.

5. Verfahren nach Anspruch 1, wobei der eine oder die mehreren physikalischen Direktzugriff-Kanäle zu derselben Konfigurationsinstanz von Direktzugriff-Betriebsmitteln in einer Systeminformation einer Zelle mit einem Uplink-Synchronisationsknoten und einem ‚Fast Physical Access Channel', welche in dem Übergabebefehl übertragen werden, gehören.

6. Verfahren nach Anspruch 1, wobei in dem Schritt (b), wenn das Benutzer-Gerät einen Direktzugriff des verbesserten Uplinks einleitet, eine Uplink-Synchronisation durchgeführt wird, indem ein Uplink-Synchronisationscode entsprechend dem Direktzugriff des verbesserten Uplinks in der Synchronisationscode-Information, welche in dem Übergabebefehl übertragen wird, verwendet wird.

7. Verfahren nach Anspruch 6, wobei in dem Schritt (b) ein Knoten B eine Bestätigungsnachricht auf einem ‚Fast Physical Access Channel' zurückgibt, nachdem der Uplink-Synchronisationscode des Benutzer-Geräts erfasst wird, und wobei das Benutzer-Gerät einen der physikalischen Direktzugriff-Kanäle, welche in dem Übergabebefehl übertragen werden, gemäß einer Hilfsrahmenzahl auswählt, wenn der ‚Fast Physical Access Channel' empfangen wird, um den Direktzugriff des verbesserten Uplinks einzuleiten.

8. Verfahren nach Anspruch 1, wobei in dem Schritt (a), wenn die Zielzelle den Dienst des verbesserten Uplinks unterstützt, die Dienstattribute, welche von dem Benutzer-Gerät angefordert werden, den Dienst des verbesserten Uplinks ausführen können und der Betriebsmittelzustand der Zielzelle dem Benutzer-Gerät zugestehen kann, den Dienst des verbesserten Uplinks auszuführen, wobei die Netzwerkseite bestimmt, dass das Benutzer-Gerät den Dienst des verbesserten Uplinks in der Zielzelle ausführen kann.

9. Verfahren nach Anspruch 1, wobei die Netzwerkseite ein ‚Service Radio Network Controller' des Benutzers-Geräts ist.

10. Verfahren nach Anspruch 9, wobei in dem Schritt (a), wenn sich ein Basisstation-Knoten B, zu welchem die Zielzelle gehört, nicht unter einer Steuerung des ‚Service Radio Network Controllers' des Benutzer-Geräts befindet, der ‚Service Radio Network Controller' die Information von Direktzugriff-Betriebsmitteln der Zielzelle von einem ‚Drift Radio Network Controller' über eine Iur- Schnittstelle erhält.

**11.** Verfahren nach Anspruch 1, wobei in dem Schritt (b) der Vorgang der Zellenübergabe umfasst: das Benutzer-Gerät baut wieder eine Funkverbindung in die Zielzelle auf, nachdem der Übergabebefehl empfangen worden ist, und gibt eine Nachricht einer Übergabebefehls-Antwort an die Netzwerkseite zurück, nachdem die Funkverbindung erfolgreich wieder aufgebaut worden ist.

## Revendications

**1.** Procédé pour réaliser un transfert intercellulaire rapide en liaison montante améliorée à appliquer dans un système d'Accès Multiple à Répartition par Code Synchrone à Répartition Temporelle, comportant les étapes suivantes :

(a) lorsqu'a lieu un transfert intercellulaire pour un Equipement Utilisateur et qu'un côté réseau détermine que l'Equipement Utilisateur peut réaliser un service en liaison montante améliorée dans une cellule destinataire, l'envoi à l'Equipement Utilisateur, par le côté réseau, d'une instruction de transfert contenant des informations sur des ressources d'accès aléatoire de la cellule destinataire ;
(b) après que l'Equipement Utilisateur a terminé le processus de transfert intercellulaire, s'il existe des données à transmettre dans une/des mémoire(s) tampon(s) correspondant à un/des support(s) radio de liaison montante améliorée, le déclenchement, par l'Equipement Utilisateur, d'un accès aléatoire pour liaison montante améliorée en fonction des informations de ressources d'accès aléatoire contenues dans l'instruction de transfert pour demander des ressources de planification à un Noeud B d'une station de base;

dans lequel, lors de l'étape (a), les informations de ressources d'accès aléatoire comprennent des informations d'un ou de plusieurs canaux physiques d'accès aléatoire et des informations d'un code de synchronisation d'accès aléatoire pour liaison montante améliorée.

**2.** Procédé selon la revendication 1, dans lequel lesdites informations de ressources d'accès aléatoire comprennent un certain nombre d'instants de tentatives d'accès aléatoire et de valeurs d'horloge d'accès aléatoire.

**3.** Procédé selon la revendication 1, dans lequel, lors de ladite étape (a), ladite instruction de transfert est un message de Commande de Ressource Radio qui peut être une Reconfiguration de Canal Physique, une Reconfiguration de Canal de Transport ou une Reconfiguration de Support Radio.

**4.** Procédé selon la revendication 1, dans lequel ledit transfert intercellulaire signifie qu'une cellule desservant la liaison montante améliorée passe à l'Equipement Utilisateur ou qu'une cellule desservant la liaison passe de l'accompagnement d'un transfert depuis un canal de liaison montante normale à un canal de liaison montante améliorée pour l'Equipement Utilisateur.

**5.** Procédé selon la revendication 1, dans lequel ledit/lesdits canal/canaux physique(s) d'accès aléatoire appartient/appartiennent à un même exemple de configuration de ressources d'accès aléatoire dans les informations système d'une cellule à code de synchronisation de liaison montante et Canal d'Accès Physique Rapide contenus dans ladite instruction de transfert.

**6.** Procédé selon la revendication 1, dans lequel, lors de ladite étape (b), quand l'Equipement Utilisateur déclenche un accès aléatoire pour liaison montante améliorée, une synchronisation de liaison montante est effectuée à l'aide d'un code de synchronisation de liaison montante correspondant à l'accès aléatoire pour liaison montante dans les informations de code de synchronisation contenues dans l'instruction de transfert.

**7.** Procédé selon la revendication 6, dans lequel, lors de ladite étape (b), le Noeud B renvoie un message d'accusé de réception sur un Canal d'Accès Physique Rapide après avoir détecté le code de synchronisation de liaison montante de l'Equipement Utilisateur et l'Equipement Utilisateur sélectionne l'un des canaux physiques d'accès aléatoire contenus dans l'instruction de transfert d'après un numéro de sous-trame quand il reçoit ledit Canal d'Accès Physique Rapide pour déclencher l'accès aléatoire pour liaison montante améliorée.

**8.** Procédé selon la revendication 1, dans lequel, lors de ladite étape (a), si la cellule destinataire contribue au service de liaison montante améliorée, si les attributs de service demandés par l'Equipement Utilisateur peuvent exécuter le service de liaison montante améliorée et si l'état des ressources de la cellule destinataire peut autoriser l'Equipement Utilisateur à exécuter le service de liaison montante améliorée, le côté réseau détermine que l'Equipement Utilisateur peut exécuter le service de liaison montante améliorée dans la cellule destinataire.

**9.** Procédé selon la revendication 1, dans lequel ledit côté réseau est un Contrôleur de Réseau Radio de Desserte de l'Equipement Utilisateur.

**10.** Procédé selon la revendication 9, dans lequel, lors de ladite étape (a), quand un Noeud B de station de base auquel appartient la cellule destinataire n'est plus sous le contrôle du Contrôleur de Réseau Radio de Desserte de l'Equipement Utilisateur, ledit Contrôleur de Réseau Radio de Desserte obtient les informations de ressources d'accès aléatoire auprès d'un Contrôleur de Réseau Radio de Dérive via une interface Iur.

**11.** Procédé selon la revendication 1, dans lequel, lors de ladite étape (b), le processus de transfert intercellulaire comprend : l'Equipement Utilisateur ré-établit une liaison radio dans la cellule destinataire après avoir reçu l'instruction de transfert et renvoie au côté réseau un message de réponse à instruction de transfert après la réussite du ré-établissement de la liaison radio.

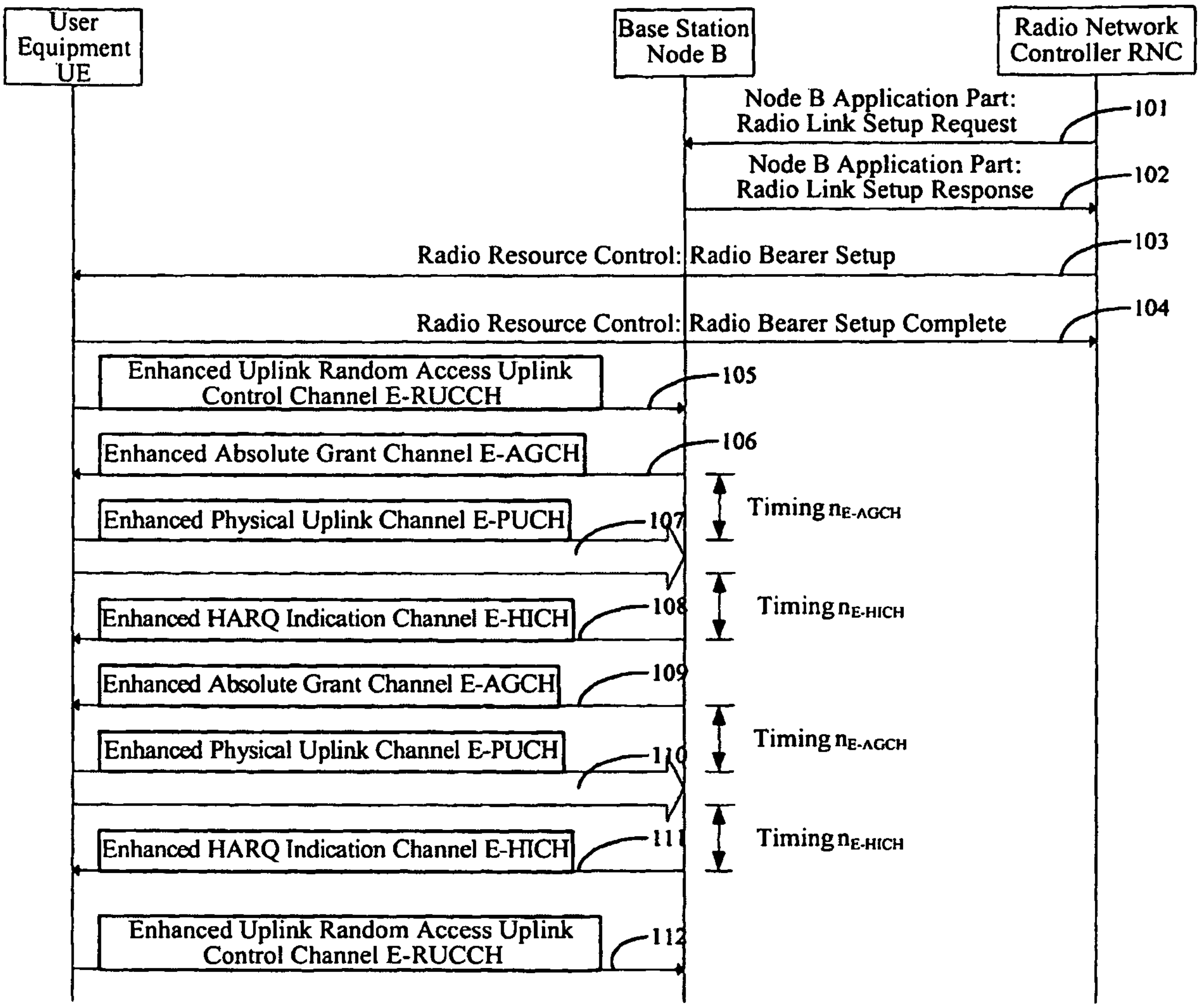
User Equipment UE
Base Station Node B
Radio Network Controller RNC
Node B Application Part: Radio Link Setup Request
101
Node B Application Part: Radio Link Setup Response
102
Radio Resource Control: Radio Bearer Setup
103
Radio Resource Control: Radio Bearer Setup Complete
104
Enhanced Uplink Random Access Uplink Control Channel E-RUCCH
105
Enhanced Absolute Grant Channel E-AGCH
106
Timing $n_{E\text{-}AGCH}$
Enhanced Physical Uplink Channel E-PUCH
107
Timing $n_{E\text{-}HICH}$
Enhanced HARQ Indication Channel E-HICH
108
Enhanced Absolute Grant Channel E-AGCH
109
Timing $n_{E\text{-}AGCH}$
Enhanced Physical Uplink Channel E-PUCH
110
Timing $n_{E\text{-}HICH}$
Enhanced HARQ Indication Channel E-HICH
111
Enhanced Uplink Random Access Uplink Control Channel E-RUCCH
112

FIG. 1

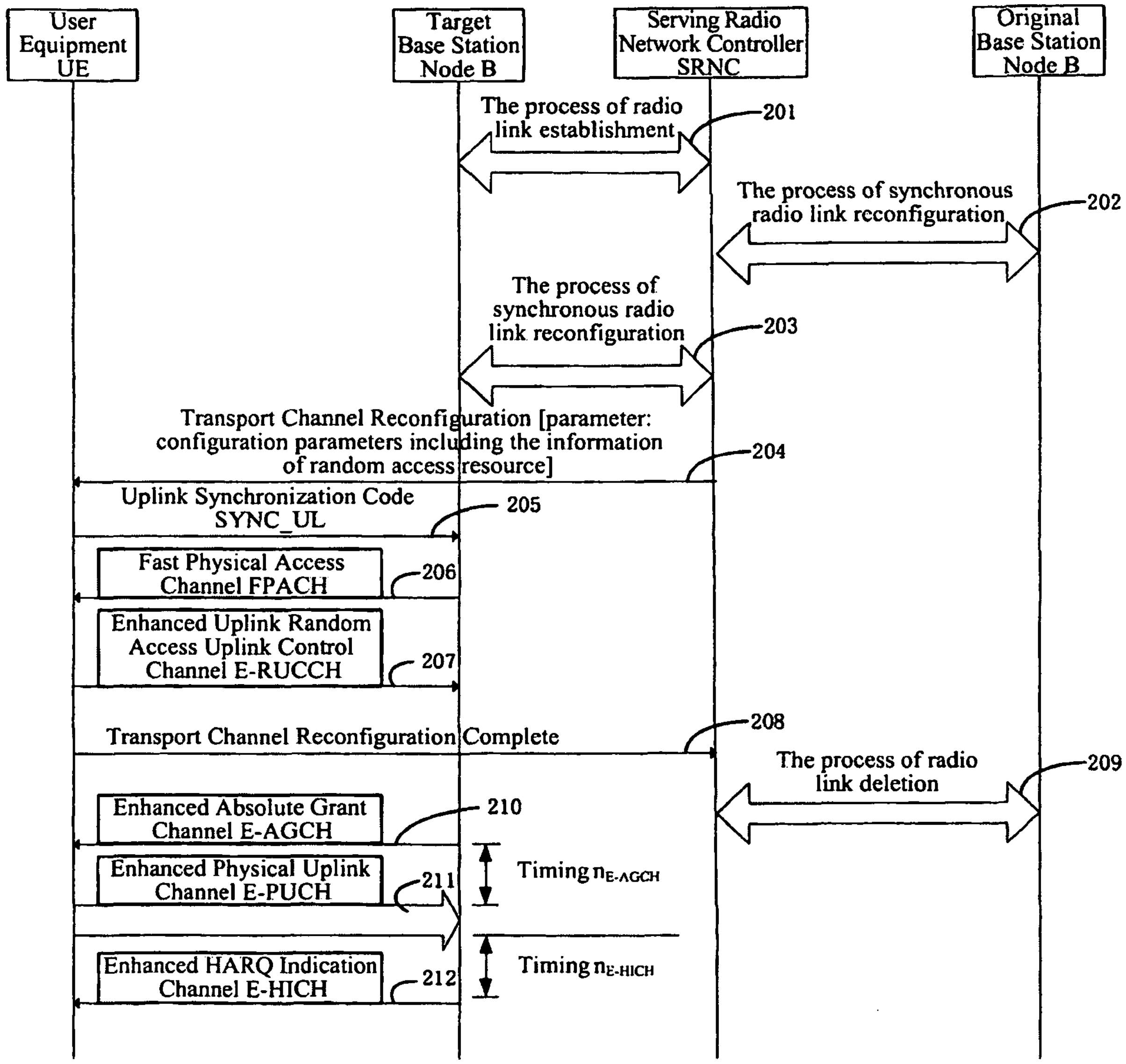
User Equipment UE
Target Base Station Node B
Serving Radio Network Controller SRNC
Original Base Station Node B
The process of radio link establishment
201
The process of synchronous radio link reconfiguration
202
The process of synchronous radio link reconfiguration
203
Transport Channel Reconfiguration [parameter: configuration parameters including the information of random access resource]
204
Uplink Synchronization Code SYNC_UL
205
Fast Physical Access Channel FPACH
206
Enhanced Uplink Random Access Uplink Control Channel E-RUCCH
207
Transport Channel Reconfiguration Complete
208
The process of radio link deletion
209
Enhanced Absolute Grant Channel E-AGCH
210
Timing $n_{E-AGCH}$
Enhanced Physical Uplink Channel E-PUCH
211
Enhanced HARQ Indication Channel E-HICH
212
Timing $n_{E-HICH}$

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005094586 A1